# EUROPEAN PATENT SPECIFICATION

(11) **EP 2 418 435 B1**
(45) Date of publication and mention of the grant of the patent: **04.05.2016**
(21) Application number: 11250706.6
(22) Date of filing: 05.08.2011
(51) Int. Cl.: F24H 1/20, F24H 9/18, F28D 7/02, F28D 20/00, F28F 9/013

(54) **A support member for a heater coil**
Halteelement für eine Heizschlange
Élément de support pour une bobine de chauffage

(30) Priority: 11.08.2010 GB 201013428
(43) Date of publication of application: 15.02.2012
(73) Proprietor: BDR Thermea Group BV, 7332 BD Apeldoorn (NL)
(72) Inventor: Clarke, Alan, Norwich NR6 8EA (GB); Uncles, James Rupert, Norwich NR6 (EA (GB)
(74) Representative: Wilson, Peter David George

(56) References cited:
- WO-A1-96/23167
- US-A- 1 786 000
- US-A- 4 231 421
- US-A1- 2004 216 865

## Description

### Field of the Invention

The present invention relates to a support for a heater coil, said coil being incorporated into a cylinder water heater. The support is particularly to provide stability during transit of the heater.

### Background to the Invention

The present invention is for use in conjunction with hot water cylinder in which heat is exchanged between a body of water within the cylinder and water passing through a coiled pipe within the body of water. To facilitate installation of the cylinder, the coil is normally fitted into the cylinder at the manufacturing site and the unit thereby produced transported to the required installation location. Such an arrangement also reduces the manufacturing costs as the specialist welding, which secures the coil in position can be incorporated efficiently as part of an industrial production process.

There is introduced thereby however the problem of transporting the cylinder and coil from the manufacturing to the installation site. This problem is often exacerbated as the cylinder and coil are often assembled with the cylinder horizontally orientated, so that at some point the cylinder needs to be turned to the in-use vertical orientation. The reorientation puts strain on the joints used to connect the coil and the cylinder. In addition the transportation puts further strain on the joint due to vibration and other forces acting on the cylinder. Once the cylinder is in position and in use, the problem is minimised as the cylinder is stable and the water within the cylinder supports the weight of the coil.

An additional problem is often present as in general, the means of attachment of the coil to the cylinder is by means of one or more welds which are on one side of the cylinder and coil. Although the vertical forces, along the axis of the cylinder are dealt with by the weld, the turning forces on the coil can act to peel the weld away and so weaken it.

If the coil is loosened from the cylinder then the functioning of the hot water cylinder is obviously compromised. Moreover, repair is not a simple option because, as part of the manufacturing process, the ends of the hot water cylinder are closed, by having end portions welded across the opening.

It is an object of the present invention to address the above problem and provide a means of supporting an installed coil. It is a further object of the invention to provide a method of stabilising a heating coil within a cylinder.

US Patent 4,231,421 describes apparatus for use in a heat exchanger assembly having wound fin tubing that includes a spacer member with a structural portion for securing components within the heat exchanger and a series of spaced projections extending therefrom, defining a series of U-shaped openings to receive and maintain the wound fin tubing in a fixed relationship. A retainer element is mounted to enclose the openings to secure the wound fin tubing therein.

International Patent Application WO 96/23167 describes a boiler having a coil supported by a plurality of support plates located either side of coil windings.

### Summary of the Invention

According to a first aspect of the invention there is provided a support for a hot-water cylinder heating coil and reduce, in particular torque forces acting on the coil, the support being so sized to span and engage the inside walls of a cylinder into which said coil is to be incorporated, and including securing means enabling a clip or tie to be secured to the support and to retain a heating coil against the support, wherein the support further comprises a central region, having a plurality of arms extending therefrom, the length of each arm being such that the end of each arm engages an inside wall of a cylinder into which the coil is to be incorporated.

The support therefore transfers forces on the coil to the walls of the cylinder thereby reducing any damage to the coil.

The length of an arm is further preferably adjustable to enable the support to be used for different cylinders.

Yet further preferably, the arms are coplanar. The use of arms reduces the weight of the support and the materials required to manufacture the support. Moreover access for an operator to secure a tie or clip about the coil is facilitated.

Especially preferably the support has three arms which are yet further preferably spaced at 120° from each other.

The end of each arm advantageously is a planar surface to maximise the surface area engaging the cylinder. Further advantageously, the planar surface describes a smooth arc and yet further advantageously an arc of a circle in the axial direction of the cylinder, which curvature allows contact to be retained in the event of slippage of the coil or the support being installed at an angle to the horizontal. The surface is optionally coated or formed of a high friction material to improve contact with a cylinder.

The securing means optionally comprises a plurality of throughholes in the support means to enable a tie or clip to pass therethrough which throughholes are are further optionally regularly spaced along a diameter of the support. The plurality of holes allows the support to be used with coils of different size and also to be able to be used where a coil is not installed in the designated position.

According to a second aspect of the invention there is provided a method of supporting a heating coil within a hot water cylinder, the method comprising the method of selecting a support, said support, being so sized to span and engage the inside walls of a cylinder, and including securing means enabling a clip or tie to be secured to the support and to retain a heating coil against the support securing the support to a heating coil at a plurality of locations along the coil.

Preferably, the support comprises a central region, having a plurality of arms extending therefrom, the length of each arm being such that the end of each arm engages an inside wall of a cylinder.

Preferably, a second support is attached to the coil and especially preferably the arms of the first support are offset radially from those of the second support.

### Brief Description of the Drawings

The invention will now be described with reference to the accompanying drawings, which show by way of example only, two embodiments of a support. In the drawings:
Figure 1 is a perspective view of a first embodiment of a support;
Figure 2 shows the embodiment of Figure 4 supporting a heating coil;
Figure 3 is a side view of the support in position;
Figure 4 is a perspective view of the second embodiment; and
Figure 5 shows a perspective view of the second embodiment supporting a heating coil.

### Detailed Description of the Invention

The support described herein is for use in supporting a heating coil, usually made of coiled pipe, within a water heating cylinder. The coil is secured at a number of locations to the inside wall of the cylinder, at least two of the locations being a water input and output port which allows water to flow along the pipe.

Although the known means of securing the coil are sufficient once the heater is installed and is filled with water, the forces which act on the coil during manufacture and transport can be sufficient to cause the coil to come loose or for the fixture to become weak. The problem is often exacerbated in that, due to the manufacturing process, the securing points are along one side of the coil which results in turning forces about the securing points, which forces act to peel the coil away from the cylinder.

One means of supporting known in the art is to use clips which snap on to the coil and which have a leaf spring contact with the wall of the cylinder. The problem with such clips is that they are installed at a stage of the manufacture of the heater when the cylinder is horizontal. When the cylinder is therefore turned to the vertical, the clips move which can result in the weight of the coil being borne by only one clip.

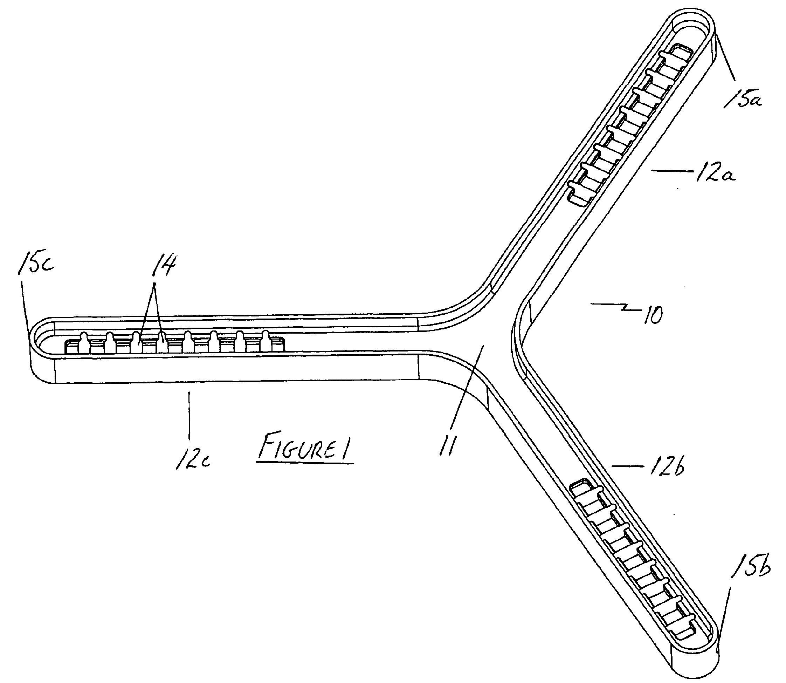

The present invention provides an improved support, which is now described initially with reference to Figure 1. In Figure 1 is shown a first embodiment of a support, generally referenced 10. The support 10 can be formed of a relatively lightweight material such as polypropylene. The material should be able to withstand the temperatures within the cylinder and the coil and not be degraded by the water. Although the function of the support, once the heater has been installed and filled with water, is largely complete it must not impair the water quality being stored.

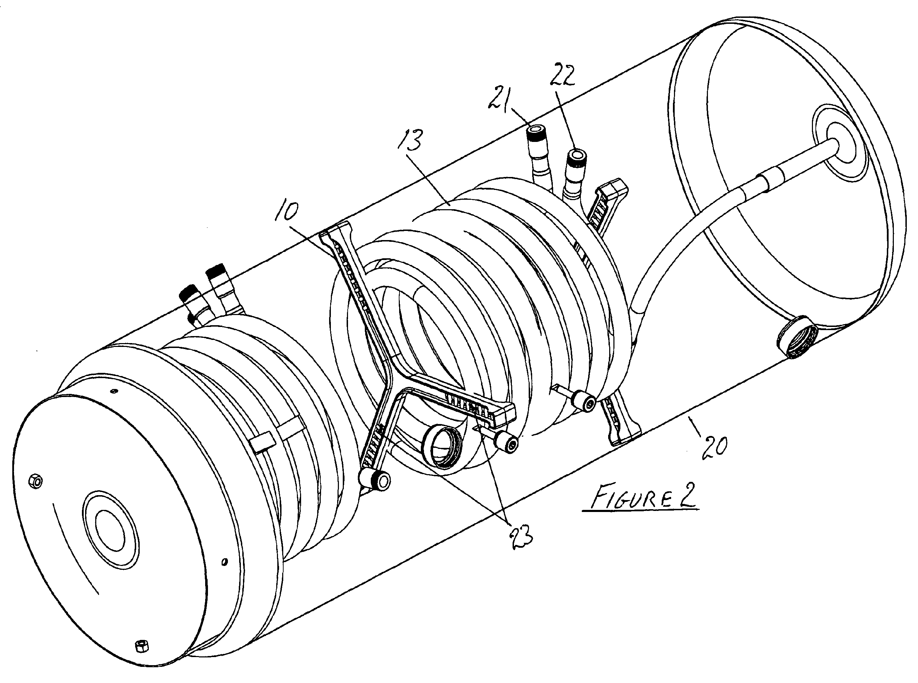

The support 10 has a central portion 11 and three arms, 12a-c extending therefrom. In use the coil 13 (see figure 2) is secured to the support 10 at one or more locations along each arm 12a-c. To facilitate the securing, each arm has a plurality of securing means, about which or to which a tie or clip can be secured. In an alternative embodiment of support (not illustrated), the length of each arm is adjustable allowing the support to be used for a cylinder of different size if so desired.

In the embodiment shown, the securing means comprises a plurality of throughapertures 14 extending along the length of an arm 12a-c, preferably at regular intervals to aid in the structural integrity. A clip or tie can thus pass through an aperture 14 and around the coil 13.

The end surface 15a-c of each arm 12a-c, in the embodiment of Figure 1 is curved about an axis perpendicular to the plane of the support 10. The curvature in this embodiment increases the contact with the curved inner surface of the cylinder and so the increased frictional forces thereby arising, better secure the support in position. The curvature can be made to lie on the arc of a circle which will match more closely that of a cylinder to which the support is expected to be fitted.

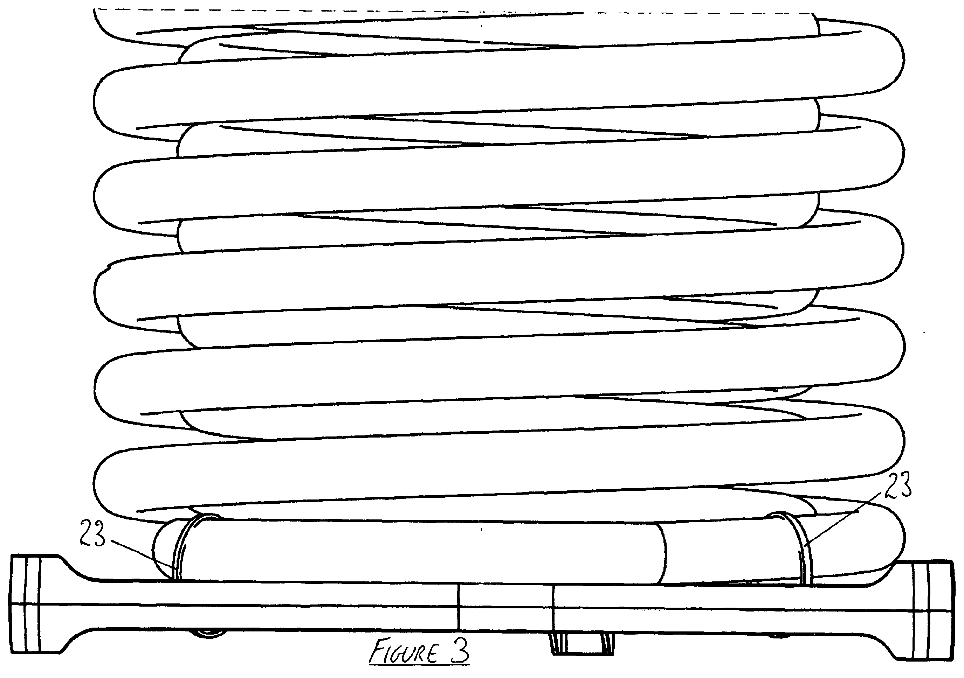

Figures 2 and 3 shows the in-use position of the support 10. The cylinder 20 (shown in transparency) has apertures 21, 22 to accommodate the ends of a coil 13 and to allow flow of water through the coil 13. The substantially planar support 10 is secured such that its plane is perpendicular to the axis of the cylinder 20. The coil 13 and the support are secured together by means of ties 23 which pass through the apertures 14 and around the coil 13. In an alternative embodiment, not illustrated, the arms include lugs, rings or other elements to which, or through which the clips or ties can be secured. The advantage of the apertures is that the material used in manufacture is less and so the weight and cost is reduced.

The diameter of the support 10 is such that the end surfaces 15a-c engage or are in contiguously spaced arrangement with the inner wall of the cylinder 20. In the event of movement of the coil 13 in a direction not parallel to the axis of the cylinder therefore, the end-surfaces 15a-c engage, or engage more strongly, the cylinder 20 and prevent the support from moving further.

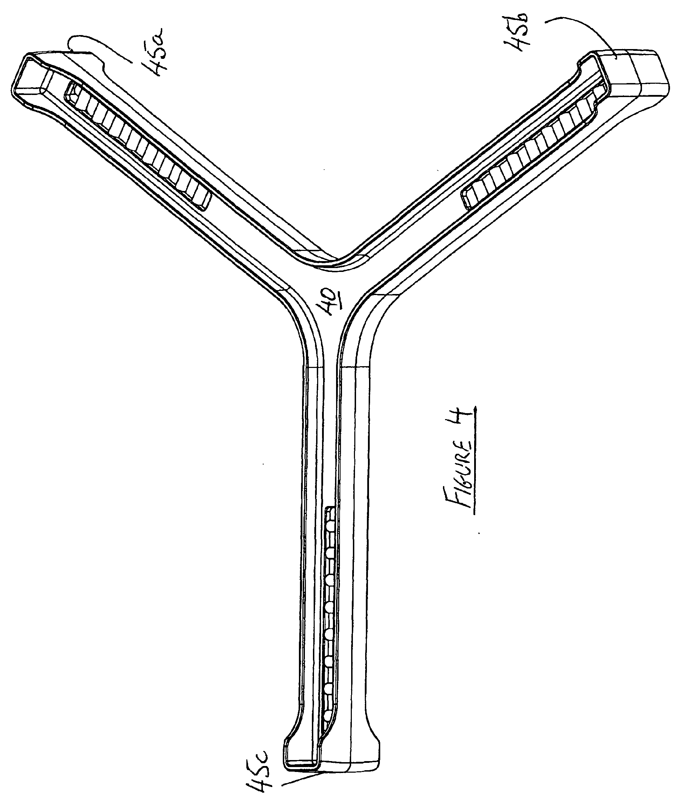

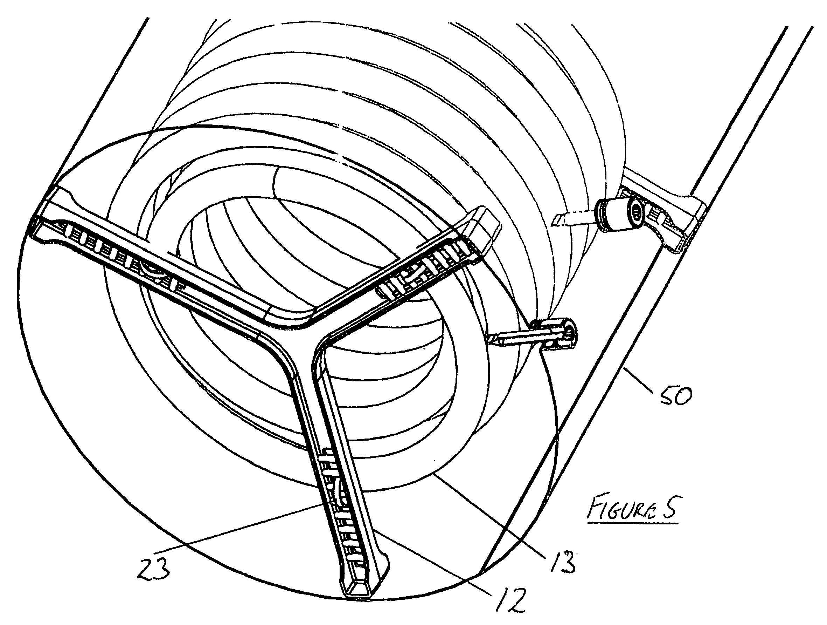

With reference to the second embodiment shown in Figures 4 and 5, the support 40 shown therein is similar to that shown in Figures 1-3, the difference lying in the profile of the end-surface 45a-c, which in this case presents a flat planar surface to the cylinder 50 and extends further to either side of the plane of the support 40.

In a further embodiment, not shown, the curvature of the end-surface can be provided with curvature about an axis which lies in the plane of the support 10/40 and perpendicular to the end face. This configuration gives improved contact with a cylinder in the event that the support cannot or is not installed horizontally. In a further embodiment, also not illustrated, the end surface may be ball shaped or curved in a direction both about and perpendicular to the axis of the cylinder to allow better engagement; for example the end surfaces can be produced to lie on the surface of a sphere.

In each of the above embodiments the surfaces 15a-c may be formed of or include a high friction material to increase the frictional force between the support and the cylinder.

In use therefore, during the manufacture of a water heater cylinder including a coiled heat exchange tube, the tube is secured by welding in position to the inside wall of the cylinder. At this point of the manufacturing stage of the process the cylinder, the bottom end of the cylinder is open. An operator therefore, inserts a support into the cylinder and moves the support along the axis of the cylinder until the support engages the coil. The support is then secured to the coil by means of tie bands which pass through the apertures in the arms of the support and around the coil. Each tie band is fastened to form a loop about both the coil and the support. A second support can be similarly secured to the other end of the coil, towards the in-use top of the coil.

If desired two or more supports can be used to support a coil. For example, where two supports are used, a support can be secured to each end of the coil. In the situation where the support has arms, the arms of a support are preferably offset radially relative to those of the other support. For example, where a support used has 3 arms, it has been found advantageous to offset rotationally the two supports by 60° from one another.

It will of course be understood that the invention is not limited to the specific details described herein, which are given by way of example only, and that various modifications and alterations are possible within the scope of the invention as defined in the appended claims.

## Claims

1. A support (10) for a hot-water cylinder heating coil, in particular to reduce torque forces acting on the coil, the support (10) being so sized to span and engage the inside walls of a cylinder (20) into which said coil is to be incorporated, and including securing means (14) enabling a clip or tie (23) to be secured to the support (10) and to retain a heating coil against the support (10), wherein the support (10) comprises a central region (11), **CHARACTERISED IN THAT**
the central region (11) has a plurality of arms (12a, 12b, 12c) extending therefrom, the length of each arm (12a, 12b, 12c) being such that the end of each arm is for engaging an inside wall of a cylinder into which said coil is to be fitted.

2. A support according to Claim 1, wherein the length of an arm (12) is adjustable to enable the support.

3. A support according to Claim 2, wherein the arms (12) are coplanar.

4. A support according to Claims 1-3, wherein the support has three arms (12a, 12b, 12c).

5. A support according to Claim 4, wherein the arms (12) are spaced radially at 120° from each other.

6. A support according to any preceding claim, wherein the end of each arm (12) is a planar surface (15, 45).

7. A support according to Claim 6, wherein the planar surface (15, 45) describes a smooth arc.

8. A support according to Claim 7, wherein the arc is an arc of a circle in the axial direction of the cylinder to which the support is to be fitted.

9. A support according to one of Claims 6-8, wherein the surface (15, 45) is coated or formed of a high friction material to improve contact with a cylinder.

10. A support according to any preceding Claim, wherein the securing means comprises a plurality of throughholes (14) in the support to enable a tie or clip to pass therethrough.

11. A support according to Claim 10, wherein the throughholes are regularly spaced along a diameter of the support.

12. A method of supporting a heating coil within a hot water cylinder, the method comprising the method of selecting a support (10), said support being so sized to span and engage the inside walls of a cylinder, and including securing means (14) enabling a clip or tie (23) to be secured to the support and to retain a heating coil (13) against the support securing the support to a heating coil at a plurality of locations along the coil, the support further comprising a central region, having a plurality of arms (12) extending therefrom, the length of each arm being such that the end of each arm engages an inside wall of a cylinder.

13. A method according to Claim 12, wherein a second support is attached to the coil.

14. A method according to Claim 13, the arms of the first support are offset radially from those of the second support.

## Patentansprüche

1. Träger (10) für eine Heißwasserzylinder-Heizschlange, insbesondere zur Verringerung von Drehmomentkräften, die auf die Schlange wirken, wobei der Träger (10) so dimensioniert ist, dass er die inneren Wände eines Zylinders (20), mit dem die Schlange verbaut werden soll, überspannt und mit diesen in Eingriff steht, und wobei er Sicherungsmittel (14) umfasst, die es ermöglichen, einen Clip oder ein Band (23) an dem Träger (10) zu sichern und eine Heizschlange gegen den Träger (10) zu halten, wobei der Träger (10) einen Zentralbereich (11) umfasst,
**dadurch gekennzeichnet, dass**
der Zentralbereich (11) eine Vielzahl von Armen (12a, 12b, 12c) aufweist, die sich davon weg erstrecken, wobei die Länge jedes Arms (12a, 12b, 12c) derart ist, dass das Ende jedes Arms in Eingriff mit einer inneren Wand eines Zylinders steht.

2. Träger nach Anspruch 1, wobei die Länge eines Arms (12) einstellbar ist, um das Tragen zu ermöglichen.

3. Träger nach Anspruch 2, wobei die Arme (12) koplanar sind.

4. Träger nach den Ansprüchen 1 bis 3, wobei der Träger drei Arme (12a, 12b, 12c) aufweist.

5. Träger nach Anspruch 4, wobei die Arme (12) radial um 120° voneinander beabstandet sind.

6. Träger nach einem der vorhergehenden Ansprüche, wobei das Ende jedes Arms (12) eine ebene Oberfläche (15, 45) ist.

7. Träger nach Anspruch 6, wobei die ebene Oberfläche (15, 45) einen gleichmäßigen Bogen beschreibt.

8. Träger nach Anspruch 7, wobei der Bogen ein Bogen eines Kreises in der axialen Richtung des Zylinders ist, an dem der Träger angebaut werden soll.

9. Träger nach einem der Ansprüche 6 bis 8, wobei die Oberfläche (15, 45) mit einem Material mit hoher Reibung beschichtet oder daraus gebildet ist, um den Kontakt mit einem Zylinder zu verbessern.

10. Träger nach einem der vorhergehenden Ansprüche, wobei das Sicherungsmittel eine Vielzahl von Durchgangsbohrungen (14) in dem Träger umfasst, um dort den Durchgang eines Bandes oder Clips zu ermöglichen.

11. Träger nach Anspruch 10, wobei die Durchgangsbohrungen in regelmäßigen Abständen entlang eines Durchmessers des Trägers angeordnet sind.

12. Verfahren zum Tragen einer Heizschlange innerhalb eines Heißwasserzylinders, wobei das Verfahren das Verfahren zur Auswahl eines Trägers (10) umfasst, wobei der Träger so dimensioniert ist, dass er die inneren Wände eines Zylinders überspannt und mit diesen in Eingriff steht, und wobei er Sicherungsmittel (14) umfasst, die es ermöglichen, einen Clip oder Binder (23) an dem Träger zu sichern und eine Heizschlange (13) gegen den Träger zu halten, wodurch der Träger an einer Vielzahl von Stellen entlang der Schlange an einer Heizschlange gesichert wird, wobei der Träger des Weiteren einen Zentralbereich umfasst, der eine Vielzahl von Armen (12) aufweist, die sich davon weg erstrecken, wobei die Länge jedes Arms derart ist, dass das Ende jedes Arms in Eingriff mit einer inneren Wand eines Zylinders steht.

13. Verfahren nach Anspruch 12, wobei ein zweiter Träger an der Schlange angebracht wird.

14. Verfahren nach Anspruch 13, wobei die Arme des ersten Trägers relativ zu jenen des zweiten Trägers radial versetzt sind.

## Revendications

1. Support (10) pour un serpentin de chauffage à cylindre d'eau chaude, en particulier, pour réduire les forces de couple agissant sur le serpentin, le support (10) étant dimensionné de manière à couvrir et s'engager avec les parois internes d'un cylindre (20) dans lequel ledit serpentin doit être incorporé, et comportant un moyen de fixation (14) permettant à une pince ou à une attache (23) d'être fixée au support (10) et de retenir un serpentin de chauffage contre le support (10), où le support (10) comprend une région centrale (11), **caractérisé en ce que**
la région centrale (11) présente une pluralité de bras (12a, 12b, 12c) s'étendant depuis celle-ci, la longueur de chaque bras (12a, 12b, 12c) étant telle que l'extrémité de chaque bras est destinée à s'engager avec une paroi interne d'un cylindre dans lequel ledit serpentin doit être ajusté.

2. Support selon la revendication 1, dans lequel la longueur d'un bras (12) peut être réglée pour permettre le support.

3. Support selon la revendication 2, dans lequel les bras (12) sont coplanaires.

4. Support selon les revendications 1 à 3, dans lequel le support présente trois bras (12a, 12b, 12c).

5. Support selon la revendication 4, dans lequel les bras (12) sont espacés de manière radiale à 120° les uns des autres.

6. Support selon l'une des revendications précédentes, dans lequel l'extrémité de chaque bras (12) est une surface plane (15, 45).

7. Support selon la revendication 6, dans lequel la surface plane (15, 45) décrit un arc lisse.

8. Support selon la revendication 7, dans lequel l'arc est un arc d'un cercle dans la direction axiale du cylindre auquel le support doit être ajusté.

9. Support selon l'une des revendications 6 à 8, dans lequel la surface (15, 45) est revêtue ou formée d'un matériau à frottement élevé pour améliorer un contact avec un cylindre.

10. Support selon l'une des revendications précédentes, dans lequel le moyen de fixation comprend une pluralité de trous traversants (14) dans le support pour permettre à une attache ou à une pince de passer à travers ceux-ci.

11. Support selon la revendication 10, dans lequel les trous traversants sont espacés de manière régulière le long d'un diamètre du support.

12. Procédé de support d'un serpentin de chauffage à l'intérieur d'un cylindre d'eau chaude, le procédé comprenant le procédé de sélection d'un support (10), ledit support étant dimensionné de manière à couvrir et s'engager avec les parois internes d'un cylindre, et comportant un moyen de fixation (14) permettant à une pince ou à une attache (23) d'être fixée au support et pour retenir un serpentin de chauffage (13) contre le support fixant le support à un serpentin de chauffage à une pluralité d'emplacements le long du serpentin, le support comprenant en outre une région centrale, ayant une pluralité de bras (12) s'étendant depuis celle-ci, la longueur de chaque bras étant telle que l'extrémité de chaque bras s'engage avec une paroi interne d'un cylindre.

13. Procédé selon la revendication 12, dans lequel un deuxième support est attaché au serpentin.

14. Procédé selon la revendication 13, les bras du premier support sont décalés de manière radiale par rapport à ceux du deuxième support.
